# EUROPEAN PATENT SPECIFICATION

(11) **EP 3 486 005 B1**
(45) Date of publication and mention of the grant of the patent: **15.01.2025**
(21) Application number: 18200980.3
(22) Date of filing: 17.10.2018
(51) Int. Cl.: B22F 3/105, B33Y 10/00, B29C 64/153, B29C 64/214, B29C 64/321, B33Y 30/00, B22F 10/28, B22F 10/36, B22F 10/64, B22F 12/60, B29C 64/218, B29C 64/165

(54) **METHOD FOR ADDITIVELY MANUFACTURING COMPONENTS**
VERFAHREN ZUR GENERATIVEN FERTIGUNG VON KOMPONENTEN
PROCÉDÉ DE FABRICATION ADDITIVE DE COMPOSANTS

(30) Priority: 17.10.2017 US 201715785695
(43) Date of publication of application: 22.05.2019
(73) Proprietor: Hamilton Sundstrand Corporation, Charlotte, NC 28217-4578 (US)
(72) Inventor: MIRONETS, Sergey, Charlotte, NC 28202 (US); WENTLAND, William Louis, Rockford, IL 61114 (US); GIULIETTI, Diana, Weatogue, CT 06089 (US); FENNESSY, Colette Opsahl, West Hartford, CT 06107 (US)
(74) Representative: Dehns

(56) References cited:
- EP-A1- 3 173 499
- EP-A1- 3 417 963
- WO-A1-2014/176536
- WO-A1-2014/179679
- WO-A1-2016/198885
- US-A1- 2016 344 948
- US-A1- 2017 197 248

## Description

### BACKGROUND

This disclosure relates to a method of additively manufacturing components, and more particularly, to additively manufacturing components with high fatigue and creep resistance strength requirements.

Certain components of gas turbine engines are operating at high temperatures and pressures and require high fatigue and creep resistance. To a large extent the microstructure of the material from which the component is formed controls the characteristics of the component. Often, however, there are process constraints and variables that may adversely influence the microstructure-properties relationship, especially in multi-phase, highly alloyed materials.

EP3417963 A1, US2016/344948 A1 and WO2014/179679 A1 disclose methods of additively manufacturing components.

### SUMMARY

A method of making a component is provided as defined by claim 1

In a further embodiment of the foregoing embodiment, a ratio of the first power to the second power is less than about 2.5.

In a further embodiment of the foregoing embodiment, the ratio of the first power to the second power is between about 1.15 and 2.

According to the invention, the first layer of powdered material has a first thickness after the depositing step, and wherein the compacting step compacts the first layer of powdered material to a second thickness that is by between about 40% and 60% of the first thickness.

According to the invention, the second thickness is between about 20 and 40 µm (0.79 and 1.57 mil).

According to the invention, a distance between the raster lines is between about 30 µm and 100 µm (1.18 and 3.94 mils).

According to the invention, the offset includes an outline offset of between about -150 and +150 µm (-5.91 to +5.91 mils) and a Heart offset of between about -150 and +150 µm (-5.91 to +5.91 mils).

In a further embodiment of the foregoing embodiment, the outline offset is between about -50 and -90 µm (-1.97 and -3.54 mil) and the Heart offset is between about -80 and -100 µm (-3.15 and -3.94 mil).

In a further embodiment of the foregoing embodiment, a controller is operable to receive signals from the software program and direct the laser during the first and second sintering steps.

According to the invention, the component is subjected to heat treatment, performed in a hot isostatic press.

In a further embodiment of the foregoing embodiment, the first unitary layer has an average grain size of between about 40 and 60 µm (1.57 and 2.36 mils) after the heat treatment.

In a further embodiment of the foregoing embodiment, the first unitary layer has generally equiaxed grain shapes.

In a further embodiment of the foregoing embodiment, the first unitary layer has an average density of greater than about 99% after the heat treatment.

In a further embodiment of the foregoing embodiment, the first scan speed is between about 2250 and 2350 mm/second (88.58 and 92.52 in/second) and the second scan speed is between about 400 and 600 mm/second (15.75 and 23.62 in/second).

According to the invention, the second layer of powdered material has a first t thickness after the depositing step, and the compacting step compacts the second layer of powdered material to a second thickness, and the second thickness is between about 20 and 40 µm (0.79 and 1.57 mil).

According to the invention, the thickness of the second compacted layer is between about 40 and 60% of the thickness of the first compacted layer.

In a further embodiment of the foregoing embodiment, the material is a powdered nickel alloy, and wherein the component is a heat exchanger is operable at temperatures greater than 871° C (1600° F).

An apparatus for making a component is provided according to claim 10.

### BRIEF DESCRIPTION OF THE DRAWINGS

Figure 1A schematically illustrates an example gas turbine engine component.
Figure 1B schematically illustrates a layer of the example gas turbine engine component, a top-down view.
Figure 2 schematically illustrates an additive manufacturing system.
Figure 3A schematically illustrates a method of additively manufacturing the component.
Figure 3B schematically illustrates a building process of the method of additively manufacturing the component.
Figure 4 schematically illustrates a component being additively manufactured on a platform.
Figure 5 schematically illustrates a top-down view of Figure 4.

### DETAILED DESCRIPTION

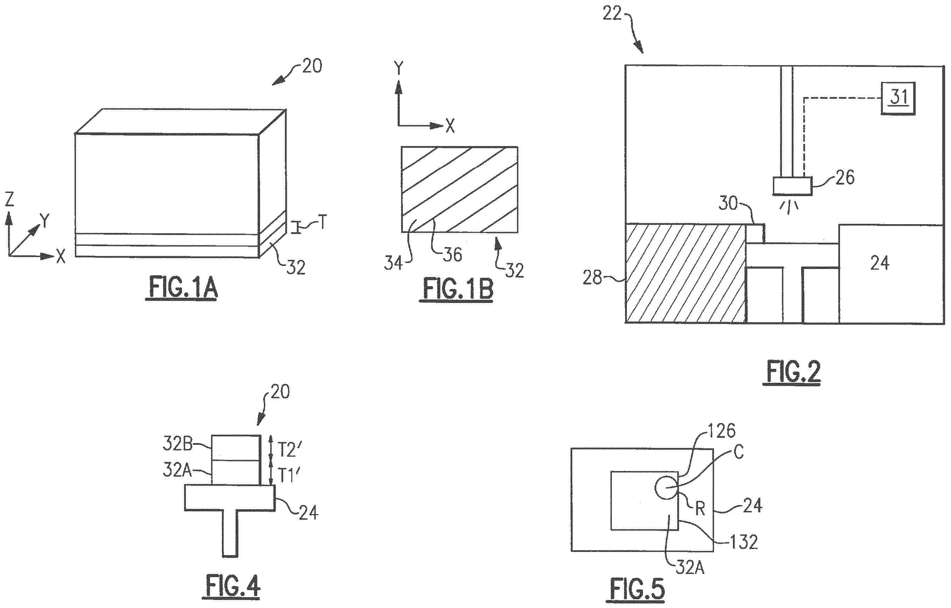

Figures 1A-B show a schematic view of an example gas turbine engine component 20. In the example of Figures 1A-B, the component 20 is a heat exchanger. More particularly, the component 20 is a heat exchanger operable at temperatures greater than 871° C (1600° F) without failure of the heat exchanger. As will be appreciated, this disclosure is not limited to heat exchangers and the examples herein apply to other components. The component 20 is formed from a nickel-based alloy with composition shown in Table 1 below. More particularly, the nickel-based alloy is Haynes^{®} 282^{®} (Haynes International) powder.

**Table 1**

| | Weight % |
|---|---|
| Chromium | 20 |
| Cobalt | 10 |
| Molybdenum | 8.5 |
| Titanium | 2.1 |
| Aluminum | 1.5 |
| Iron | 1.5 max |
| Manganese | 0.3 max |
| Silicon | 0.15 max |
| Carbon | 0.06 |
| Boron | 0.005 |
| Nickel | Balance |

Though the component 20 is shown with an example geometry, the component 20 can have any shape, including areas of non-uniform thicknesses. Heat exchangers in particular often include thick areas (such as manifolds) and thinner areas (such as fins), which may be solid or hollow, or include internal features such as cooling passages.

The component 20 is formed by an additive manufacturing process, such as a powder-bed fusion process. More particularly, the component 20 is formed by a laser selective melting process. The component 20 is subjected to a heat treatment after being additively manufactured, which will be discussed in more detail below.

Figure 2 shows an example additive manufacturing system 22. The system 22 includes a platform 24, a laser 26, a powder reservoir 28, a compaction-style recoater 30 (such as a rolling recoater system), and a controller 31 operable to direct movement of the laser beam 26. The controller 31 includes necessary software and/or hardware to perform the functions disclosed herein. In general, material (such as powdered nickel-based alloy, discussed above) from the material source 28 is deposited onto the platform 24. The material is then compacted with the compaction-style recoater 30. The controller 31 receives signals from a software program to direct the laser 26 to selectively melt portions of the compacted material according to a sliced file derived from a CAD model's component geometry in the software program to form the component 20.

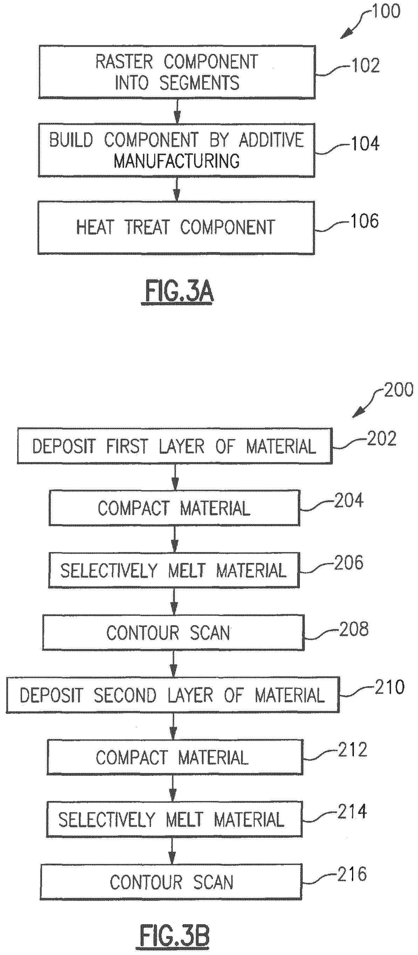

Figure 3A schematically shows a method 100 of additively manufacturing the component 20 with the additive manufacturing system 22. A digital model, such as a computer-aided design file, of the desired shape of the component 20 is provided to a software program for rastering (step 102). During rastering, the software program creates digital "slices" or layers of the component shape in the z-direction. In Figures 1A-B, layers 32 are shown on the physical component 20 corresponding to the digital model. Each digital layer has a thickness T, which ranges between about 10 and 80 µm (0.39 to 3.15 mils) on corresponding component 20. The software program also divides the digital layer into segments in the x-y plane delineated by raster lines. Segments 34 and raster lines 36 are shown in Figure 1B on the physical component 20 corresponding to the digital model. A distance H between raster lines known as a hatch distance, and is shown on the physical component 20 corresponding to the digital model in Figure 1B. In one example, the distance H is between about 30 µm and 100 µm (1.18 and 3.94 mils). In a particular example, the distance H is between about 40 µm and 60 µm (1.57 and 2.36 mils).

In a further example, rastering (step 102) also includes segmenting each layer 32 into "tiles" which can have any shape (square, hexagonal, etc.). This strategy is generally used for larger parts to prevent component warping due to the high density of residual stresses and thermal lensing during the additive manufacturing process.

Referring back to Figure 3A, in step 104 the component is formed or built by additive manufacturing. The building process 200 is shown in more detail in Figure 3B and discussed below. In step 106, a heat treatment is performed, which will also be discussed below.

Referring now to the building process 200 shown in Figure 3B, in step 202, a first layer 32A of powdered material, such as the nickel-based alloy described above, is deposited onto the platform 24 from the material source 28 (Figure 2). In step 204, the first layer 32A is compacted with the compaction-style recoater 30. The compaction step 204 compacts the first layer 32A by between 0 and 50% of the thickness T1 to form a layer 32A having thickness T1'. In a particular example, the compaction step 204 compacts the first layer 32 by between about 20 and 40%. The compaction step results in a packed density of the powdered material of between about 4 and 6 g/cc. More particularly, the packed density is between about 4.8 and 5.3 g/cc. This first layer 32A, also known as the "initial down," has a thickness T1' of between about 40 and 100 µm (1.57 and 3.94 mils) after compaction in step 204. In one particular example, the thickness T1' is between about 50 and 70 µm (1.97 and 2.76 mil) after compaction in step 204.

In step 206, the software program directs the laser 26 along the digital raster lines 36 to sinter (or melt) the powdered material into a unitary solid layer 32A, shown in Figure 4. In one example, if the layer 32A is further rastered into "tiles," the laser 26 is directed along the all the raster lines 36 of a single tile before moving on to another tile and repeating the process. In other examples, the laser 26 is directed along various paths, depending on the scan strategy. Scan strategies can be comprised of one or more scan styles to fill in the bulk of the layer 32A. The example scan strategy described herein is known as "heart fill." The software program directs the laser 26 via the controller 31. The software program describes the laser 26 inputs that control the energy provided to a specific quantifiable area, which is the area of the projection of a laser beam 126 onto the component 20 (shown in Figure 5). These inputs include the power output of the laser 26, and the speed of the laser 26 traversing over the build plan (or the "scan speed"). The scan speed and power are dependent on the machine capability. In one example, the laser 26 operates at a range between 0 and 1000 W over the area of the projection of a laser beam 126 onto the component 20. In a particular example, the laser 26 operates at power range of between about 200 and 230 W area of the projection of the laser beam 126 onto the component 20. In one example, the laser 26 operates at a scan speed of between about 2000 and 2500 mm/second (78.74 and 98.43 in/second). In a particular example, the laser 26 operates at a scan speed of between about 2250 and 2350 mm/second (88.58 and 92.52 in/second). The focused laser beam 126 diameter can range from 50 to 80 microns, with a center point C. If the hatch distance H (discussed above) is too large, the component 20 will have voids in between the raster lines 36 because there will be areas in between the raster lines 36 that are not sintered properly. If it is too small, the sintering step can take multiple passes over the same material and cause overheating and/or distortion. The hatch distance H is thus related to the size of the laser beam (discussed in more detail below) and is selected to minimize both voids and overheating/distortion in the final component 20. Generally hatch distance H is selected to provide a small amount of overlap between successive passes of the laser 26. Step 206 is sometimes known as a "hex scan."

In step 208, the laser 26 is directed by the software program via the controller 31 along the perimeter of the layer 32A to in a subsequent scan strategy, known as a "contour scan," to solidify the perimeter of the layer 32A. In one example, the laser 26 operates at a power range between 0 and 1000 W over the area of the projection of the laser beam 126 onto the component 20. In a particular example, the laser 26 operates at power range between about 100 to 200 W over the area of the projection of a laser beam 126 onto the component 20. In one example, the laser 26 operates at a scan speed of between about 250 and 750 mm/second (9.84 and 29.53 in/second). In a particular example, the laser 26 operates at a scan speed of between about 400 and 600 mm/second (15.75 and 23.62 in/second).

In one example, the ratio of the laser 26 power density in step 206 to the ratio of the power density in step 208 is less than about 2.5. More particularly, the ratio is between about 1.15 and 2.

Referring to Figure 5, the laser 26 produces a beam 126 with a center point C and a radius R. In some examples, the radius R is between about 25 and 50 µm (0.98 and 1.97 mils). The beam 126 corresponds to a "melt pool" of material on the component 20. In some examples, the melt pool has a radius of between about 30 and 40 µm (1.18 and 1.57 mils).

The center point C of the laser beam 126 is offset from a nominal edge 132 of component 20. Like the hatch distance H, an offset is selected to prevent overheating and/or distortion of material sintered during step 206 above, while also providing some small amount of overlap of sintered material to minimize voids in the perimeter of the layer 32A. In one example, the beam 126 is also offset so as not to overhang the edge 132. This maintains the desired shape of the component 20. In one example, the center point C is offset during step 206 to provide a linear offset of between about -150 and +150 µm (-5.91 to +5.91 mils). In a particular example, the linear offset is between about -80 and -100 µm (-3.15 and -3.94 mil). In another example, the linear offset is related to the size of a melt pool created by the beam 126. For instance, the linear offset is between about 40% and 60% of a diameter of the melt pool.

In some examples, the center point C is offset during the contour scanning of step 208 in two dimensions. First, the "outline offset" shifts the center point C with respect to the nominal edge 132. A negative outline offset shifts the outer contour of the component 20 towards a center point of layer 32A and a positive offset shifts the outer contour of the component 20 away from a center point of layer 32A. In one example, the outline offset is related to the size of the melt pool created by the beam 126. For example, the outline offset is between about 40% and 60% of a diameter of the melt pool. In another example, the outline offset is between about -150 and +150 µm (-5.91 to +5.91 mils) from the nominal edge 132 of component 20. In a particular example, the outline offset is between about -50 and -90 µm (-1.97 and -3.54 mil).

In a further example, the outline offset is less than the liner offset discussed above. The center point C of the laser beam 126 also has a "heart offset" which is related to the mathematical edge of the contour of component 20. The heart offset value refers to the laser beam position 126 to compensate for the edge of the beam 126 at the edge 132 of the component 20, which is as close as possible to the nominal dimension of the component 20 as determined by the software program discussed above. In one example, the heart offset is between about 150 and +150 µm. In a particular example, the heart offset is between about -80 and -100 µm (-3.15 and - 3.94 mil).

In step 210, the platform 24 is lowered and a second layer 32B of material is deposited onto the first layer 32A from the material source 28. The second layer 40 is compacted in step 212 by between 0 and 50% of the thickness T2 to form a layer 40 having thickness T2', as shown in Figure 4. In a particular example, the compaction step 212 compacts the second layer 40 by between about 30 and 40%. In one example, the thickness T2' is less than the initial down thickness T1'. The thickness T2' of the second layer 32B is between about 20 and 40 µm (0.79 and 1.57 mil). In a particular example, the thickness T2' is between about 25 and 35 µm (0.98 and 1.38 mil). In another particular example, the thickness T2' is between about 40 and 60% of the thickness T1'.

In step 214, the software program directs the laser along the digital raster lines to sinter (or melt) the powdered material into a unitary solid layer 32B, shown in Figure 4, as in step 206.

In step 216, the second layer 32B is contour scanned as in step 208. Steps 210, 212, and 214, and 216 are then repeated until the component 20 has the desired shape.

Table 2 below shows the relationship between laser power (P), scan speed (V), layer 32A, 32B thickness (T), compaction percentage of the powdered material, and hatch distance (H).Each column shows the effect on the other variables where one variable is increased. For instance, looking to the first column, an increased P corresponds to increased V, T, and H and decreased compaction percentage.

**Table 2**

| | Increased P | Increased V | Increased T | Increased Compaction % | Increased H |
|---|---|---|---|---|---|
| P | | + | + | - | + |
| V | + | | - | + | - |
| T | + | - | | + | - |
| Compaction | - | + | + | | + |
| H | + | - | - | + | |

Referring back to Figure 3A, in step 106, a heat treatment is performed on the component 20 after it is formed. The heat treatment further solidifies the component 20. In one example, heat treatment is performed in a hot isostatic press ("HIP") and can include solutionizing heat treatment. The heat treatment can be performed in a single cycle, minimizing the time the component 20 is held at a high temperature, which in turn translates to finer grain size in the component 20 microstructure and improved fatigue properties. Because the heat treatment can be performed in a single cycle, manufacturing time and cost is reduced.

Typically with nickel alloy components, there is a tradeoff between fatigue and creep resistance. The process parameters described above (including the laser 26 power and scan speed, the layer 32A, 32B thickness T1' and T2', the hatch distance H, and the outline and heart offsets) produce a component 20 with improved fatigue and creep resistance. Fatigue and creep resistance are related to the microstructure of the component 20. The component 20 formed as discussed above has high density, greater than approximately 99, and in one example, approximately 99.8%, and minimized porosity which contributes to its improved fatigue and creep resistance. The component 20 has a grain morphology with generally uniform grain size, between about 40 µm and 60 µm average grain size between 40 and 60 µm (1.57 and 2.36 mils), and generally close to equiaxed grain shapes, which also contributes to its improved homogeneity and Young modulus. Furthermore, the microstructure of component 20 can be obtained in both thick and thin areas of component 20 with the method described above. That is, minimal or no process changes are needed to obtain high fatigue and creep resistance over the entire component 20, irrespective of its shape, meaning manufacturing costs and time are lowered.

Furthermore, the foregoing description shall be interpreted as illustrative and not in any limiting sense. A worker of ordinary skill in the art would understand that certain modifications could come within the scope of the invention as defined by the claims. The scope of the invention is defined by the claims.

## Claims

1. A method of making a component, comprising:
providing a digital model of a component to a software program, the software program operable to slice the digital model into digital layers and raster each digital layer into digital segments, the digital segments delineated by digital raster lines;
depositing a first layer of powdered material onto a platform;
compacting the first layer of powdered material into a first compacted layer;
sintering the first compacted layer along lines corresponding to the digital raster lines using a laser, wherein the laser operates at a first power and a first scan speed, the first power being between about 200 and 230 W and the first scan speed is between 2000 and 2500 mm/second (78.74 and 98.43 in/second); and
sintering the first compacted layer along a perimeter of the first compacted layer using the laser to form a first unitary layer, wherein the laser operates at a second power and a second scan speed, the second power being between about 100 and 200 W, and the second scan speed is between 250 and 750 mm/second (9.84 and 29.53 in/second); and, thereafter,
(a) depositing a second layer of powdered material onto the first unitary layer;
(b) compacting the second layer of powered material into a second compacted layer;
(c) sintering the second compacted layer along lines corresponding to the digital raster lines using the laser, wherein the laser operates at the first power and the first scan speed; and
(d) sintering the second compacted layer along a perimeter of the second compacted layer using the laser to form a second unitary layer, wherein the laser operates at the second power and the second scan speed;
repeating steps (a) to (d) until the component has the desired shape, thereby forming the component;
subjecting the component to heat treatment performed in a hot isostatic press;
wherein the first and second layers of powdered material have a first thickness after their respective depositing steps, and wherein the respective compacting steps compact the first and second layers of powdered material to a second thickness that is by between 40% and 60% of the first thickness, and wherein the second thickness is between 20 and 40 µm (0.79 and 1.57 mil);
wherein a distance between the raster lines is between 30 µm and 100 µm (1.18 and 3.94 mils); and
wherein the offset includes an outline offset of between about -150 and +150 µm (-5.91 to +5.91 mils) and a Heart offset of between about -150 and +150 µm (-5.91 to +5.91 mils).

2. The method of claim 1, wherein a ratio of the first power to the second power is less than 2.5, and preferably wherein the ratio of the first power to the second power is between 1.15 and 2.

3. The method of claim 1 or 2, wherein the outline offset is between -50 and -90 µm (-1.97 and -3.54 mil) and the Heart offset is between -80 and -100 µm (-3.15 and -3.94 mil).

4. The method of any preceding claim, wherein a controller is operable to receive signals from the software program and direct the laser during the first and second sintering steps.

5. The method of any preceding claim, wherein the first unitary layer has an average density of greater than 99% after the heat treatment.

6. The method of claim 5, wherein the first unitary layer has an average grain size of between 40 and 60 µm (1.57 and 2.36 mils) after the heat treatment.

7. The method of claim 6, wherein the first unitary layer has equiaxed grain shapes.

8. The method of any preceding claim, wherein the first scan speed is between 2250 and 2350 mm/second (88.58 and 92.52 in/second) and the second scan speed is between 400 and 600 mm/second (15.75 and 23.62 in/second).

9. The method of any preceding claim, wherein the material is a powdered nickel alloy, and wherein the component is a heat exchanger is operable at temperatures greater than 871°C (1600° F).

10. An apparatus for making a component, comprising:
a controller (31) configured to receive signals from a software program, the software program operable to slice a digital model of a component (20) into digital layers (32) and raster each digital layer into digital segments (34), the digital segments delineated by digital raster lines (36);
a material source (28) configured to provide material to a platform;
a compactor (30) configured to compact the material; and
a laser (26) configured to sinter the material, the controller configured to move the laser to sinter the material along the raster lines at a first power and a first speed and along a perimeter of the component at a second power and a second scan speed, wherein the first power is between about 200 and 230 W and the first scan speed is between 2000 and 2500 mm/second (78.74 and 98.43 in/second) and the second power is between about 100 and 200 W and the second scan speed is between 250 and 750 mm/second (9.84 and 29.53 in/second; and
a hot isostatic press for heat treating the component after sintering;
wherein the apparatus is configured to perform the method according to claim 1.

## Patentansprüche

1. Verfahren zum Herstellen einer Komponente, umfassend:
Bereitstellen eines digitalen Modells einer Komponente an ein Softwareprogramm, wobei das Softwareprogramm dazu betreibbar ist, das digitale Modell in digitale Schichten aufzuteilen und jede digitale Schicht in digitale Segmente zu rastern, wobei die digitalen Segmente durch digitale Rasterlinien abgegrenzt sind; Aufbringen einer ersten Schicht aus pulverförmigem Material auf eine Plattform;
Verdichten der ersten Schicht aus pulverförmigem Material zu einer ersten verdichteten Schicht;
Sintern der ersten verdichteten Schicht entlang von Linien, die den digitalen Rasterlinien entsprechen, unter Verwendung eines Lasers, wobei der Laser mit einer ersten Leistung und einer ersten Scangeschwindigkeit arbeitet, wobei die erste Leistung zwischen etwa 200 und 230 W beträgt und die erste Scangeschwindigkeit zwischen 2000 und 2500 mm/Sekunde (78,74 und 98,43 Zoll/Sekunde) beträgt; und
Sintern der ersten verdichteten Schicht entlang eines Umfangs der ersten verdichteten Schicht unter Verwendung des Lasers, um eine erste einheitliche Schicht zu bilden, wobei der Laser mit einer zweiten Leistung und einer zweiten Scangeschwindigkeit arbeitet, wobei die zweite Leistung zwischen etwa 100 und 200 W beträgt und die zweite Scangeschwindigkeit zwischen 250 und 750 mm/Sekunde (9,84 und 29,53 Zoll/Sekunde) beträgt; und danach
(a) Aufbringen einer zweiten Schicht aus pulverförmigem Material auf die erste einheitliche Schicht;
(b) Verdichten der zweiten Schicht aus pulverförmigem Material zu einer zweiten verdichteten Schicht;
(c) Sintern der zweiten verdichteten Schicht entlang von Linien, die den digitalen Rasterlinien entsprechen, unter Verwendung des Lasers, wobei der Laser mit der ersten Leistung und der ersten Scangeschwindigkeit arbeitet; und
(d) Sintern der zweiten verdichteten Schicht entlang eines Umfangs der zweiten verdichteten Schicht unter Verwendung des Lasers, um eine zweite einheitliche Schicht zu bilden, wobei der Laser mit der zweiten Leistung und der zweiten Scangeschwindigkeit arbeitet;
Wiederholen der Schritte (a) bis (d), bis die Komponente die gewünschte Form aufweist, wodurch die Komponente gebildet wird; Vornehmen einer Wärmebehandlung an der Komponente, die in einer heißisostatischen Presse durchgeführt wird;
wobei die erste und die zweite Schicht aus pulverförmigem Material nach ihren jeweiligen Aufbringungsschritten eine erste Dicke aufweisen, und wobei die jeweiligen Verdichtungsschritte die erste und die zweite Schicht aus pulverförmigem Material auf eine zweite Dicke verdichten, die zwischen 40 % und 60 % der ersten Dicke beträgt, und wobei die zweite Dicke zwischen 20 und 40 µm (0,79 und 1,57 mil) beträgt;
wobei ein Abstand zwischen den Rasterlinien zwischen 30 µm und 100 µm (1,18 und 3,94 mil) beträgt; und
wobei der Versatz einen Umrissversatz zwischen etwa -150 und +150 µm (-5,91 bis +5,91 mil) und einen Heart-Versatz zwischen etwa -150 und +150 µm (-5,91 bis +5,91 mil) beinhaltet.

2. Verfahren nach Anspruch 1, wobei ein Verhältnis der ersten Leistung zu der zweiten Leistung kleiner als 2,5 ist, und wobei vorzugsweise das Verhältnis der ersten Leistung zu der zweiten Leistung zwischen 1,15 und 2 beträgt.

3. Verfahren nach Anspruch 1 oder 2, wobei der Umrissversatz zwischen -50 und -90 µm (-1,97 und -3,54 mil) und der Heart-Versatz zwischen -80 und -100 µm (-3,15 und -3,94 mil) beträgt.

4. Verfahren nach einem der vorhergehenden Ansprüche, wobei eine Steuerung dazu betreibbar ist, Signale von dem Softwareprogramm zu empfangen und den Laser während des ersten und des zweiten Sinterschritts zu führen.

5. Verfahren nach einem der vorhergehenden Ansprüche, wobei die erste einheitliche Schicht nach der Wärmebehandlung eine durchschnittliche Dichte von über 99 % aufweist.

6. Verfahren nach Anspruch 5, wobei die erste einheitliche Schicht nach der Wärmebehandlung eine durchschnittliche Korngröße zwischen 40 und 60 µm (1,57 und 2,36 mil) aufweist.

7. Verfahren nach Anspruch 6, wobei die erste einheitliche Schicht gleichachsige Kornformen aufweist.

8. Verfahren nach einem der vorhergehenden Ansprüche, wobei die erste Scangeschwindigkeit zwischen 2250 und 2350 mm/Sekunde (88,58 und 92,52 Zoll/Sekunde) und die zweite Scangeschwindigkeit zwischen 400 und 600 mm/Sekunde (15,75 und 23,62 Zoll/Sekunde) beträgt.

9. Verfahren nach einem der vorhergehenden Ansprüche, wobei das Material eine pulverförmige Nickellegierung ist und wobei die Komponente ein Wärmetauscher ist, der bei Temperaturen über 871 °C (1600 °F) betreibbar ist.

10. Vorrichtung zum Herstellen einer Komponente, umfassend:
eine Steuerung (31), die dazu konfiguriert ist, Signale von einem Softwareprogramm zu empfangen, wobei das Softwareprogramm dazu betreibbar ist, ein digitales Modell einer Komponente (20) in digitale Schichten (32) aufzuteilen und jede digitale Schicht in digitale Segmente (34) zu rastern, wobei die digitalen Segmente durch digitale Rasterlinien (36) abgegrenzt sind;
eine Materialquelle (28), die dazu konfiguriert ist, Material an eine Plattform bereitzustellen;
einen Verdichter (30), der dazu konfiguriert ist, das Material zu verdichten; und
einen Laser (26), der dazu konfiguriert ist, das Material zu sintern, wobei die Steuerung dazu konfiguriert ist, den Laser zum Sintern des Materials entlang der Rasterlinien mit einer ersten Leistung und einer ersten Geschwindigkeit und entlang eines Umfangs der Komponente mit einer zweiten Leistung und einer zweiten Scangeschwindigkeit zu bewegen, wobei die erste Leistung zwischen etwa 200 und 230 W beträgt und die erste Scangeschwindigkeit zwischen 2000 und 2500 mm/Sekunde (78,74 und 98,43 Zoll/Sekunde) beträgt und die zweite Leistung zwischen etwa 100 und 200 W beträgt und die zweite Scangeschwindigkeit zwischen 250 und 750 mm/Sekunde (9,84 und 29,53 Zoll/Sekunde) beträgt; und
eine heißisostatische Presse zur Wärmebehandlung der Komponente nach dem Sintern;
wobei die Vorrichtung dazu konfiguriert ist, das Verfahren nach Anspruch 1 durchzuführen.

## Revendications

1. Procédé de fabrication d'un composant comprenant :
fournir un modèle numérique d'un composant à un programme logiciel, le programme logiciel étant capable de découper le modèle numérique en couches numériques et de raster chaque couche numérique en segments numériques, les segments numériques étant délimités par des lignes raster numériques ;
déposer une première couche de matériau en poudre sur une plate-forme ;
compacter la première couche de matériau en poudre en une première couche compactée ;
fritter la première couche compactée le long de lignes correspondant aux lignes de trame numériques à l'aide d'un laser, dans lequel le laser fonctionne à une première puissance et à une première vitesse de balayage, la première puissance étant comprise entre environ 200 et 230 W et la première vitesse de balayage étant comprise entre 2000 et 2500 mm/seconde (78,74 et 98,43 pouces/seconde) ; et
fritter la première couche compactée le long d'un périmètre de la première couche compactée en utilisant le laser pour former une première couche unitaire, dans lequel le laser fonctionne à une seconde puissance et à une seconde vitesse de balayage, la seconde puissance étant comprise entre environ 100 et 200 W, et la seconde vitesse de balayage étant comprise entre 250 et 750 mm/seconde (9,84 et 29,53 pouces/seconde) ; et, par la suite,
(a) déposer une seconde couche de matériau en poudre sur la première couche unitaire ;
(b) compacter la seconde couche de matériau en poudre en une seconde couche compactée ;
(c) fritter la seconde couche compactée le long de lignes correspondant aux lignes de trame numériques à l'aide du laser, dans lequel le laser fonctionne à la première puissance et à la première vitesse de balayage ; et
(d) fritter la seconde couche compactée le long d'un périmètre de la seconde couche compactée en utilisant le laser pour former une seconde couche unitaire, dans lequel le laser fonctionne à la seconde puissance et à la seconde vitesse de balayage ;
répéter les étapes (a) à (d) jusqu'à ce que le composant ait la forme souhaitée, formant ainsi le composant ;
soumettre le composant à un traitement thermique effectué dans une presse isostatique à chaud ;
dans lequel les première et seconde couches de matériau en poudre ont une première épaisseur après leurs étapes de dépôt respectives, et dans lequel les étapes de compactage respectives compactent les première et seconde couches de matériau en poudre jusqu'à une seconde épaisseur qui est comprise entre 40 % et 60 % de la première épaisseur, et dans lequel la seconde épaisseur est comprise entre 20 et 40 µm (0,79 et 1,57 mil) ;
dans lequel la distance entre les lignes de trame est comprise entre 30 µm et 100 µm (1,18 et 3,94 millièmes) ; et
dans lequel le décalage comporte un décalage de contour compris entre environ -150 et +150 µm (-5,91 à +5,91 millièmes) et un décalage de cœur compris entre environ -150 et +150 µm (-5,91 à +5,91 millièmes).

2. Procédé selon la revendication 1, dans lequel le rapport de la première puissance à la seconde puissance est inférieur à 2,5, et de préférence dans lequel le rapport de la première puissance à la seconde puissance est compris entre 1,15 et 2.

3. Procédé selon la revendication 1 ou 2, dans lequel le décalage du contour est compris entre -50 et -90 µm (-1,97 et - 3,54 mil) et le décalage du cœur est compris entre -80 et - 100 µm (-3,15 et -3,94 mil).

4. Procédé selon l'une quelconque des revendications précédentes, dans lequel un contrôleur est apte à recevoir des signaux provenant du programme logiciel et à diriger le laser pendant les première et deuxième étapes de frittage.

5. Procédé selon l'une quelconque des revendications précédentes, dans lequel la première couche unitaire a une densité moyenne supérieure à 99 % après le traitement thermique.

6. Procédé selon la revendication 5, dans lequel la première couche unitaire a une granulométrie moyenne comprise entre 40 et 60 µm (1,57 et 2,36 millièmes) après le traitement thermique.

7. Procédé selon la revendication 6, dans lequel la première couche unitaire présente des formes de grains équiaxes.

8. Procédé selon l'une quelconque des revendications précédentes, dans lequel la première vitesse de balayage est comprise entre 2250 et 2350 mm/seconde (88,58 et 92,52 pouces/seconde) et la seconde vitesse de balayage est comprise entre 400 et 600 mm/seconde (15,75 et 23,62 pouces/seconde).

9. Procédé selon l'une quelconque des revendications précédentes, dans lequel le matériau est un alliage de nickel en poudre, et dans lequel le composant est un échangeur de chaleur pouvant fonctionner à des températures supérieures à 871 °C (1600 °F).

10. Appareil pour fabriquer un composant, comprenant :
un dispositif de commande (31) configuré pour recevoir des signaux provenant d'un programme logiciel, le programme logiciel étant capable de découper un modèle numérique d'un composant (20) en couches numériques (32) et de raster chaque couche numérique en segments numériques (34), les segments numériques étant délimités par des lignes de trame numériques (36) ;
une source de matériau (28) configurée pour fournir du matériau à une plate-forme ;
un compacteur (30) configuré pour compacter le matériau ; et
un laser (26) configuré pour fritter le matériau, le dispositif de commande étant configuré pour déplacer le laser pour fritter le matériau le long des lignes de trame à une première puissance et une première vitesse et le long d'un périmètre du composant à une seconde puissance et une seconde vitesse de balayage, la première puissance étant comprise entre environ 200 et 230 W et la première vitesse de balayage étant comprise entre 2000 et 2500 mm/seconde (78,74 et 98,43 pouces/seconde) et la seconde puissance étant comprise entre environ 100 et 200 W et la seconde vitesse de balayage étant comprise entre 250 et 750 mm/seconde (9,84 et 29,53 pouces/seconde ; et
une presse isostatique à chaud pour le traitement thermique du composant après frittage ;
dans lequel l'appareil est configuré pour mettre en œuvre le procédé selon la revendication 1.
